# EUROPÄISCHE PATENTSCHRIFT

(11) **EP 2 051 888 B1**
(45) Veröffentlichungstag und Bekanntmachung des Hinweises auf die Patenterteilung: **19.10.2011**
(21) Anmeldenummer: 07788375.9
(22) Anmeldetag: 10.08.2007
(51) Int. Cl.: B60T 8/48, B60T 8/40

(54) **FREMDANSTEUERBARE ELEKTROHYDRAULISCHE FAHRZEUGBREMSANLAGE**
EXTERNALLY CONTROLLABLE ELECTROHYDRAULIC VEHICLE BRAKE SYSTEM
DISPOSITIF DE FREINAGE ELECTRO-HYDRAULIQUE POUR VÉHICULE POUVANT ÊTRE ENCLENCHÉ DE L'EXTÉRIEUR

(30) Priorität: 10.08.2006 DE 102006037621; 06.08.2007 DE 102007036859
(43) Veröffentlichungstag der Anmeldung: 29.04.2009
(73) Patentinhaber: Continental Teves AG & Co. OHG, 60488 Frankfurt (DE)
(72) Erfinder: FEIGEL, Hans-Jörg, 61191 Rosbach (DE); DINKEL, Dieter, 65824 Schwalbach (DE)
(86) Internationale Anmeldenummer: PCT/EP2007/058340
(87) Internationale Veröffentlichungsnummer: WO 2008/017726

(56) Entgegenhaltungen:
- EP-A- 0 459 117
- EP-A- 1 334 894
- WO-A-94/25322
- DE-A1- 4 102 864
- DE-A1- 10 209 984
- DE-A1- 10 324 246
- DE-A1- 19 835 250
- DE-A1- 19 910 229
- JP-A- 11 198 786

## Beschreibung

Die Erfindung betrifft eine fremdansteuerbare elektrohydraulische Fahrzeugbremsanlage nach dem Oberbegriff des Patentanspruchs 1.

Bei herkömmlichen fremdansteuerbaren Bremssystemen vom geschlossenen Typ besteht stets die Anforderung, unter sämtlichen Betriebsbedingungen einen schnellen Druckaufbau oder Druckpuls in bestimmten Radbremsen zu ermöglichen. üblicherweise umfassen diese Bremssystem ein sogenanntes Umschaltventil, welches eine Umschaltung im Saugpfad einer Kolbenpumpe derart ermöglicht, dass das Druckmittel durch einen Hauptzylinder aus einem Behälter angesaugt werden kann, um es in Richtung der gewünschten Radbremse zu fördern. In diesem Zusammenhang sind bereits vielfach Vorschläge unterbreitet worden, um eine Drosselwirkung des Hauptzylinders infolge Engstellen in dem Saugpfad zu vermeiden. Die Wirkung derartiger, meist lokal-konstruktiver, Maßnahmen im Inneren von einem Hauptzylinder ist relativ beschränkt.

Aus EP 0 459 117 A ist bereits eine fremdansteuerbare elektrohydraulische Fahrzeugbremsanlage bekannt, die zum Antrieb einer hydraulischen Pumpe über einen Elektromotor verfügt, um bei Bedarf eine hydraulische Ladevorrichtung anzutreiben, welche als Kolben-Zylinder-Einheit ausgebildet ist und zur Vorladung mit dem Eingang der Pumpe verbunden ist.

Auch die DE 41 02 864 A1 offenbart eine fremdansteuerbare elektrohydraulische Fahrzeugbremsanlage mit einer aus einer Kolben-Zylinder-Einheit bestehenden Ladevorrichtung, deren Steuerkammer zur Vorladung mit dem Eingang einer Pumpe verbunden ist, mit der Besonderheit, dass der Kolben der Ladevorrichtung permanent von einer elastisch vorgespannten Druckfeder beaufschlagt ist, wodurch der Kolben permanent in Richtung der Steuerkammer beaufschlagt ist.

Die DE 198 35 250 A1 offenbart eine fremdansteuerbare elektrohydraulische Fahrzeugbremsanlage mit einer aus einer Kolben-Zylinder-Einheit bestehenden Ladevorrichtung, deren Versorgungskammer von einer hydraulischen Pumpe gespeist wird, wobei unter Umgehung der hydraulischen Pumpe die Versorgungskammer mit einem zwischen deren Ausgang und dem Eingang der Pumpe angeordneten Abzweig verbunden ist, der eine Verbindung zu einer Radbremse oder einem Hauptzylinder ermöglicht.

Aus EP 1 334 894 A2 ist eine fremdansteuerbare elektrohydraulische Fahrzeugbremsanlage bekannt, mit einer Kolben-Zylinder-Einheit, die einerseits im ABS-Betrieb die Funktion eines Niederdruckspeichers übernimmt, andererseits in der Funktion einer Ladevorrichtung ausschließlich im ESP-Betrieb eine an die Kolben-Zylinder-Einheit angeschlossenen Pumpe eingangsseitig mit einem Vorladedruck beaufschlagt, wobei die Pumpe ausgangsseitig eine Verbindung zur Kolben-Zylinder-Einheit aufweist, um dies aufladen zu können.

Aus JP11 198786 geht eine fremdansteuerbare elektrohydraulische Fahrzeugbremsanlage mit einer Ladevorrichtung hervor, die als Kolben-Zylinder-Einheit ausgebildet ist, deren Ladekammer über ein Rückschlagventil mit dem Eingang einer Pumpe verbunden ist und über ein in Grundstellung gesperrtes Schaltventil normalerweise vom Ausgang der Pumpe getrennt ist. Zur Aufladung der Ladevorrichtung mittels der Pumpe nimmt das Schaltventil seine geöffnete Stellung ein, wodurch der in der Ladekammer angeordnete Kolben entgegen der Wirkung einer Druckfeder zurückgestellt wird.

Die DE 199 10 229 A1 offenbart eine fremdansteuerbare elektrohydraulische Fahrzeugbremsanlage der gattungsbildenden Art, die eine mit einer hydraulischen Pumpe verbundene hydraulische Ladevorrichtung aufweist, welche mittels eines in einem Zylinder geführten Kolbens eine Steuerkammer von einer Versorgungskammer trennt. Die Versorgungskammer ist mit dem Eingang der Pumpe verbunden, wobei zwischen dem Pumpenausgang und der Steuerkammer eine Verbindung vorgesehen ist.

Der Erfindung liegt daher die Aufgabe zu Grunde, ein Bremssystem vorzuschlagen, das hochdynamische Druckaufbauvorgänge ermöglicht, ohne durch die Drosselwirkung von einem Hauptzylinder sowie zumeist langer Ansaugpfade beeinträchtigt zu werden. Insbesondere soll das Tieftemperaturverhalten bei zähflüssigem Druckmittel verbessert werden.

Eine weitere Anforderung besteht darin, dass das Fahrzeugbremssystem nach Möglichkeit mit den unterschiedlich ausführbaren Arrangements im Antriebsstrang von Hybrid-Fahrzeugen harmoniert, und dennoch eine annehmbare Betätigungscharakteristik sowie annehmbaren Komfort bei vertretbarem Aufwand ermöglicht. Ein Schwerpunkt soll insbesondere auch darin bestehen, für Anwendungen in Fahrzeugen mit einer hohen Volumenaufnahme (schwere Personenkraftfahrzeuge) nicht nur einen hohen Druck sondern auch einen hohen Volumenstrom sehr schnell abgeben zu können. Die Aufgabe wird für eine fremdansteuerbare elektrohydraulische Fahrzeugbremsanlage der angegebenen Art durch die kennzeichnenden Merkmale des Patentanspruchs 1 gelöst.

Die Erläuterung erfolgt im Wesentlichen anhand von einer so genannten schwarz-weiß-Aufteilung, bei der die Reibungsbremsen einer angetriebenen Achse von den Reibungsbremsen einer nicht angetriebenen Achse anhand der Bremskreise separiert sind.

Die bevorzugten Ausführungsformen verfügen über den besonderen Vorteil, dass die Versorgungskammer ein Druckmittelreservoir zur Druckmittelversorgung, insbesondere zur Vorladung der hydraulischen Pumpe ermöglicht, und dass ein Saugpfad der hydraulischen Pumpe - nach Verschluß von einem Trennventil - in der Versorgungskammer endet. Weil die Kolben-Zylinder-Einheit kein zwingender Bestandteil vom Hauptzylinder sein muss, sondern vielmehr in oder an einem Aufnahmekörper der hydraulischen Pumpe anordbar ist, ergeben sich besonders kurze Ansaugwege, was die Dynamik im Druckaufbau zusätzlich unterstützt.

Vorteilhafterweise ist der Kolben als Stufenkolben mit zwei Kolbenflächen derart ausgebildet, dass ein pumpenseitig in die Steuerkammer eingespeister Druck über eine erste Kolbenfläche auf die Steuerkammer einwirkt. Eine zweite Kolbenfläche vom Kolben wirkt auf das Druckmittel in der Versorgungskammer. Weiterhin ist vorgesehen, dass die zweite Kolbenfläche größer als die erste Kolbenfläche ausgebildet ist. Durch diese Maßnahme wird gewissermaßen - innerhalb der Grenzen vom Gesetz der Volumenkonstanz - eine vorteilhafte hydraulische Übersetzung im Sinn von einem Druck-Volumen-Wandler ausgenutzt.

Prinzipiell ist der Kolben der Ladevorrichtung permanent von einer elastisch vorgespannten Druckfeder beaufschlagt, so dass der Kolben stets elastisch in Richtung Steuerkammer gedrängt wird. Es versteht sich, dass die Federsteifigkeit der Druckfeder so abgestimmt ist, dass diese zwar den reversibel stattfindenden Befüllprozess der Versorgungskammer unterstützt, aber Ladevorgänge im Wesentlichen nicht behindert.

In einer besonders bevorzugten Variante der Erfindung kommt eine Ladevorrichtung zum Einsatz, die ein integriertes Niederdruckspeichervolumen beinhaltet, so dass für die beiden Funktionen lediglich ein Baumodul vorzusehen ist.

Zur Harmonisierung mit Kraftfahrzeugen, die eine elektrischregenerative Bremsvorrichtung aufweisen, ist mit Vorteil vorgesehen, dass die hydraulische Pumpe mit der Ladevorrichtung auf die Reibungsbremsen eines Kreises einwirkt, die zu einer nicht angetriebenen Achse von einem Kraftfahrzeug mit Hybridantrieb gehören. Ebenso ist es denkbar, dass jede Radbremse einer Achse, jeweils voneinander getrennt, eine Pumpe und einen Ladevorrichtung aufweist.

In erweiterter Ausgestaltung der Erfindung ist vorgesehen, dass jeder Kreis eine Pumpe mit einem Ladevorrichtung aufweist, und dass die Mittel zur Äußerung eines Bremswunsches einen Simulator aufweisen. Derartige Abwandlungen betreffen im Wesentlichen Bremsanlagen ohne Vakuumbremskraftverstärker. Wenn zumindest ein anderer, benachbarter, Bremskreis konventionell - also nicht im by-wire-Modus- betrieben wird, hat dies den Vorteil, dass der Fahrzeugführer dadurch eine mechanische Rückkopplung mit der gewünschten Betätigungscharakteristik erhält. Durch diesen teilweisen hydraulischen Durchgriff ist ein Betätigungssimulator - wie er bei sogenannten EHB-Anlagen obligatorisch ist - obsolet, und es kann mit einem entsprechend angepassten Hauptzylinder gearbeitet werden.

Weitere Einzelheiten der Erfindung gehen aus Unteransprüchen im Zusammenhang mit der Beschreibung anhand der Zeichnung hervor. In der Zeichnung zeigt:
Fig. 1 prinzipieller Schaltplan von einem Bremssystem mit einem hydraulischen Ladevorrichtung im Hinterachskreis,
Fig. 2 vereinfachte Ausführungsform von einem Bremssystem mit einem hydraulischen Ladevorrichtung in einem Bremskreis,
Fig. 3 abgewandelte Ausführungsform von einem Bremssystem nach Fig. 2 mit hydraulischen Ladevorrichtungn in zwei Bremskreisen und zusätzlicher Wegsensorik,
Fig. 4 abgewandelte Ausführungsform von einem Bremssystem nach Fig. 2 mit Eingang- und Ausgangventilen vor den Reibungsbremsen,
Fig. 5 eine Variante mit Multiplexing vergleichbar Fig. 2, welche nicht zu der Erfindung gehört, wobei ein Ladevorrichtung im Kreis der angetriebenen Achse vorgesehen ist, und den Eingang der Pumpe beaufschlagt,
Fig. 6 eine Variante mit Multiplexing vergleichbar Fig. 3, welche nicht zu der Erfindung gehört, wobei in jedem Kreis ein Ladevorrichtung vorgesehen ist, und den Eingang der Pumpe beaufschlagt,
Fig. 7 eine Ausführungsform mit einem hydraulischen Verstärker, welcher einen Primärkolben von einem Hauptbremszylinder beaufschlagt, und mit einem Ladevorrichtung im Sekundärkreis, der die angetriebene Achse betrifft, wobei der Ausgang der Pumpe dem Eingang des Ladevorrichtung aufgeschaltet ist, und
Fig. 8 eine vereinfachte Ausführungsform vergleichbar Fig. 4, jedoch ohne pneumatischen Bremskraftverstärker, wobei zusätzliche Abzweige es ermöglichen, dass die Versorgungskammer unter Umgehung der Pumpe mit den Radbremsen oder dem Hauptzylinder verbindbar ist, sowie mit reversibler Befüllung der Versorgungskammer und zusätzlichem Schluckvolumen in einem Niederdruckspeicher,
Fig. 9 eine Ausführungsform vergleichbar Fig. 9, jedoch mit reduzierter Ventilanzahl für Multiplexing, und
Fig. 10 ein konstruktiver Vorschlag für einer Ladevorrichtung mit einem integriertem Niederdruckspeicher im Schnitt in größerem Maßstab.

Die Figuren geben weitgehend prinzipielle Schaltpläne von Fahrzeugbremsanlagen wieder. Die betreffenden Kraftfahrzeugbremssysteme 1 dienen insbesondere zum Einsatz in Kombination mit regenerativ nutzbaren Antriebssträngen enthaltend wenigstens eine angetriebene Achse, bei denen die kinetische Energie zumindest zu einem Teil reversibel zwischengespeichert oder direkt umgenutzt wird. Dadurch unterscheiden sich diese Systeme maßgeblich von konventionellen Antriebssträngen, bei denen ausschließlich eine irreversible Energiewandlung in Richtung kinetische Energie stattfindet. Die verwendeten Fahrzeugbremssysteme 1 ermöglichen auf elektronischem Wege eine Mittlung zwischen regenerativ/reversibel gewandelter Bremsenergie einerseits und irreversibel mechanisch gewandelter Bremsenergie andrerseits. Die Erfindung ist jedoch nicht ausschließlich für diesen Zweck vorgesehen, so dass auch eine Anwendung bei konventionell angetriebenen Kraftfahrzeugen möglich ist.

Bei regenerativer Nutzung beinhaltet das Bremssystem jedoch, neben weiteren Bestandteilen, welche schwerpunktmäßig dem Antriebsstrang zuzuordnen sind, meist eine nicht im Einzelnen gezeichnete elektrische Maschine in Form von einem Generator, der im Bremsbetrieb zur Wandlung von kinetischer Energie in elektrische Energie genutzt werden kann, um beispielsweise eine Fahrbatterie aufzuladen. Gleichermaßen ist ein völlig anderer elektrischer Speicher denkbar, der in der Lage ist, unnötige kinetische Energie in Form von potentieller Energie zu speichern, wie beispielsweise ein Schwungmassenspeicher, ein hydraulischer Ladevorrichtung mit Hydrospeicher oder ähnliches mehr. In diesem Zusammenhang ist es zunächst völlig ohne Belang, wie der Antriebsstrang konstruktiv im Detail ausgebildet ist.

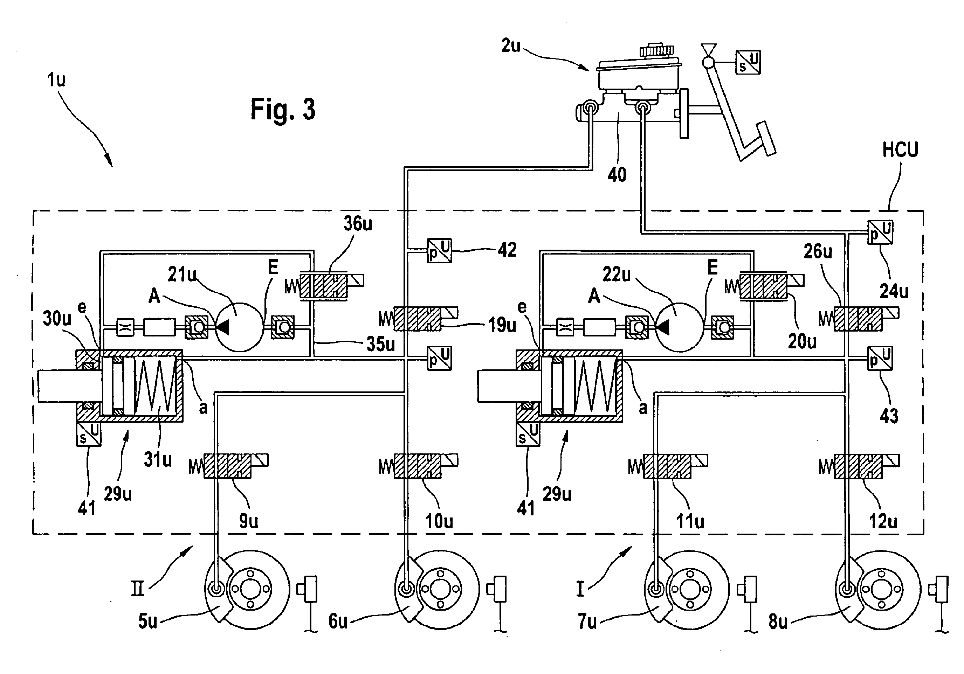

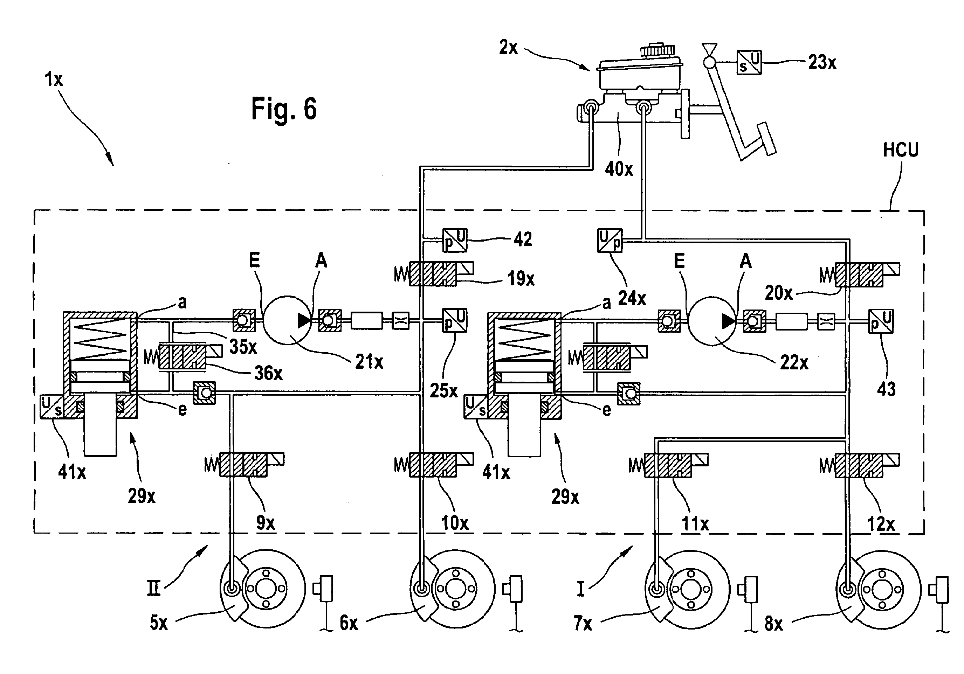

Weiterhin beinhaltet das Bremssystem eine Mensch-Maschine-Schnittstelle wie beispielsweise ein Bremsgerät 2 umfassend Hauptzylinder 3 mit Bremsflüssigkeitsbehälter und Bremskraftverstärker 4. Soweit nicht anderweitig vermerkt, vermittelt das Bremsgerät 2 ein passendes Bremsbetätigungsgefühl an den Fahrzeugführer. Dies geschieht beispielsweise, indem mindestens ein Bremskreis I des Systems einen hydraulisch-mechanischen Durchgriff auf Reibungsbremsen ermöglicht, der dem Fahrzeugführer das gewünschte Bremsbetätigungsgefühl vermittelt. Demgegenüber ist der andere Bremskreis II, der die angetriebene Achse betrifft, gewissermaßen entkoppelt, und wird nach by-wire Grundsätzen geregelt. Wenn der hydraulisch-mechanische Durchgriff im Normalbetrieb für sämtliche Bremskreise fehlt (vgl. Fig. 3,6), kommt ein Simulator 40 zum Einsatz, der dem Fahrzeugführer das gewünschte Pedalgefühl vermittelt.

Die Figuren 3 und 6-7 zeigen Bremsgeräte 2 ohne pneumatischen Bremskraftverstärker 4, weil in diesen Fällen im weitesten Sinne hydraulische Verstärker zum Einsatz kommen. Je Fahrzeugrad ist wenigstens eine hydraulische Reibungsbremse 5 vorgesehen, die zusammen mit wenigstens einer anderen Reibungsbremse 6 gemeinsam in einem Bremskreis II organisiert ist, und wobei jeder der Reibungsbremsen 5-8 jeweils ein stromlos offenes Einlassventil 9-12 sowie generell ein stromlos geschlossenes Auslassventil 13-16 vorgeschaltet ist. In einer hydraulischen Verbindung 17,18 zwischen Hauptzylinder 3 und Reibungsbremsen 5-8 befindet sich je Kreis I,II ein stromlos offenes Trennventil 19,20, das einerseits eine Abtrennung der hydraulischen Verbindung 17, 18 als auch im stromlosen Notzustand einen unmittelbar hydraulisch-mechanischen Durchgriff auf die Reibungsbremsen 5-8 erlaubt. Ein Raddrehsensor je Fahrzeugrad ist selbstverständlich.

Die hydraulischen Reibungsbremsen 5-8 sind mit Vorteil entweder in vorgegebenen oder in individuell anpassbaren Bremskreiskombinationen zusammengefasst. Zusammen mit einer hydraulischen Pumpe 21,22 sowie zusammen mit den stromlos offenen Trennventilen 19,20 und gegebenenfalls unter Nutzung von einem Umschaltventil 26 zur Variation von dem Saugpfad wird ein autonomer Druckaufbau zur Fahrstabilitätsregelung, zur Abstandregelung, zur Anhalteassistenz oder für ähnliche elektronisch initiierte Mehrwertfunktionen ermöglicht. Weitere Funktionen bestehen beispielhaft in einer allseits bekannten Antiblockierregelung sowie Antriebsschlupfregelung.

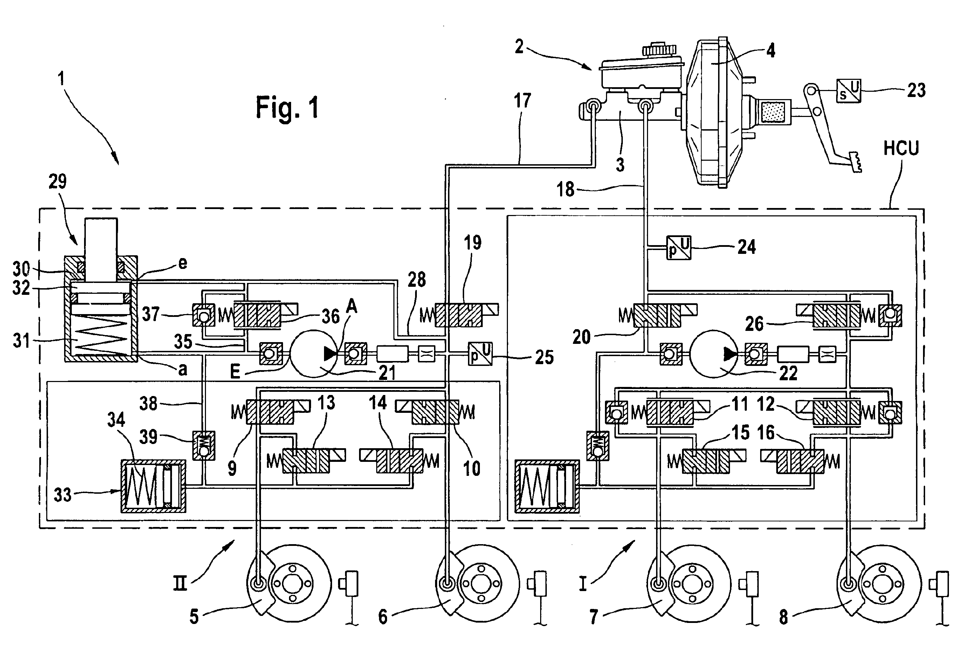

Im Folgenden wird auf die Besonderheiten, auch im Funktionsverhalten, eines Bremssystems 1 nach Fig. 1 eingegangen, welches auf einer so genannten schwarz-weiß-Bremskreisaufteilung der Reibungsbremsen 5-8 basiert.

Ein Pedalwinkel- oder Wegsensor 23 erfasst einen Bremswunsch am Bremsgerät 2 oder an der damit verbundenen Pedalerie. Parallel dazu wird in einem konventionell betätigten - nicht angetriebenen - Vorderachskreis I der fahrerseitig gewünschte hydraulische Druck mit Hilfe von einem Drucksensor 24 permanent gemessen. Ein weiterer Drucksensor 25 kann im Hinterachsbremskreis II hinter dem Trennventil 19 sowie ganz generell jeweils individuell im Bereich aller Reibungsbremsen 5-8 vorgesehen sein, um den eingeregelten Bremsdruck vor Ort zu ermitteln, so dass in einer vollständigen Ausbaustufe insgesamt 6 Drucksensoren vorgesehen sein können. Aus den geschilderten Größen (Pedalwinkel, Druck im Hauptzylinder 3) wird ein Bremsdruck für die Reibungsbremsen 5,6 der angetriebenen Hinterachse ermittelt, welcher bei bedarf stets einen aktuell regenerativ nutzbaren Bremsanteil an der Hinterachse berücksichtigt. Als Antwort auf den ermittelten Bremsdruck wird für den Hinterachskreis II das Trennventil 19 zwischen Hauptzylinder 3 und Reibungsbremse 5,6 in Schließposition gebracht, so dass der Fahrzeugführer diesbezüglich von hydraulischen Rückwirkungen vollständig entkoppelt ist. Dadurch wird der Betätigungskomfort maßgeblich erhöht, denn der Fahrzeugführer erhält ausschließlich eine Rückwirkung aus dem mechanisch-hydraulischen Durchgriff auf die Reibungsbremsen 7,8 vom Kreis I, während irgendwelche anderen Regelvorgänge oder Pulsationen vom Kreis II keine unkomfortabel wahrnehmbaren mechanisch-hydraulischen Rückwirkungen erzeugen. Streng genommen wird also nur am Kreis II, der die angetriebene Achse betrifft, das brake-by-wire Prinzip angewendet, während der Kreis I ganz bewusst konventionell mit hydraulischer Rückwirkung betrieben wird. Dadurch werden zusätzlichen Kosten für einen gesonderten Simulator 40 in geschickter Art und Weise eingespart. Im Ergebnis wird der Hardwareaufwand dadurch abgesenkt, unkomfortable Rückwirkungen werden reduziert, -gleichzeitig wird die Berücksichtung regenerativer Bremsmomente ermöglicht.

Der Druckaufbau am Hinterachskreis II erfolgt elektrohydraulisch quasi alleine aufgrund der hydraulischen Pumpe 21 und gegebenenfalls unter Berücksichtigung regenerativ nutzbarer Bremsanteile. Zu diesem Zweck befindet sich in Richtung Reibungsbremsen 5,6, hinter dem Trennventil 19, ein Abzweig 28, der zu einem saugseitigen Eingang E von der hydraulischen Pumpe führt. Der Ausgang A dieser hydraulischen Pumpe 21 führt über die oben beschriebenen Einlassventile 9,10 zu wenigstens einer der Reibungsbremsen 5,6. Im Wesentlichen zeitgleich mit dem Schließen des Trennventils 19 ist die hydraulische Pumpe 21 in Betrieb, um den Druckaufbau an der gewünschten Reibungsbremse zu initiieren. Damit der Druckaufbau hochdynamisch erfolgen kann, ist dem Eingang E der hydraulischen Pumpe 21 eine Ladevorrichtung 29 vorgeschaltet. Die Ladevorrichtung 29 ist als Kolben-Zylinder-Aggregat ausgebildet und verfügt über zwei Kammern, nämlich eine eingangsseitige Steuerkammer 30 und eine ausgangsseitige Versorgungskammer 31, die von einem bewegbaren, federvorgespannten Kolben 32 voneinander getrennt sind. Während die Steuerkammer 30 prinzipiell vom Ausgang der Pumpe 21 beaufschlagt ist, entleert sich die Versorgungskammer 31 in den Eingang E der Pumpe. Die Größe der Versorgungskammer 31 ist so dimensioniert, dass diese im Wesentlichen immer, zumindest in geringem Umfang, Druckmittel zur Verfügung stellen kann, selbst wenn ein Niederdruckspeicher 33 und die Reibungsbremsen 5,6 maximal gefüllt sind. Der Kolben 32 ist gestuft und verfügt über zwei unterschiedlich groß ausgeführte Flächen, wobei steuerkammerseitig die kleinere Fläche und versorgungskammerseitig die größere Fläche vorgesehen ist. Eine elastisch vorgespannte Druckfeder 44 wirkt entgegen der zweiten (größeren) Fläche, und hält den Kolben 32 im Ruhezustand permanent in einer Endlage, in der die Versorgungskammer 31 mit Druckmittel gefüllt ist. Weiterhin ist ein Bypass 35 vorgesehen, welcher eine trennbare hydraulische Verbindung zwischen einem Eingang e und einem Ausgang a von der Ladevorrichtung 29 ermöglicht. Zu diesem Zweck ist in dem Bypass 35 ein stromlos offenes Regelventil 36 vorgesehen, dessen Sperrstellung mit einem Rückschlagventil 37 versehen ist, welches in Richtung Steuerkammer 30 öffnet.

In weiterem Unterschied zu bekannten Bremssystemen ist zwischen dem Niederdruckspeicher 33 und dem Ausgang a oder der Versorgungskammer 31 von der Ladevorrichtung 29 eine hydraulische Verbindung 38 vorgesehen, in der ein Rückschlagventil 39 angeordnet ist, welches in Richtung Versorgungskammer 31 öffnet. Dadurch wird verhindert, dass sich die Versorgungskammer 31 einfach in den relativ schwach befederten Niederdruckspeicher 33 entleeren kann.

Der Vorderachskreis I verfügt über eine Leitungsführung und Verschaltung, wie sie im Wesentlichen mit konventionellen ESP-Schaltkreisen übereinstimmt, so dass diesbezüglich keine hardwaretechnischen Besonderheiten zu beschreiben sind. Die Betriebsverfahren stimmen mit vorbekannten fremdansteuerbaren Fahrzeugbremssystemen überein.

Die Funktion von dem beschriebenen Bremssystem ist, anlässlich einer fahrerinitiierten Bremsung, in Hinblick auf die Hinterachse wie folgt. Nach Sensierung von einem Bremswunsch und Verarbeitung der gewonnenen Bewegungs- und Drucksignale in einer elektronischen Regeleinheit (ECU) wird das Trennventil 19 und auch das Regelventil 36 in Sperrstellung gebracht. Gleichzeitig wird die hydraulische Pumpe 21 zum Druckaufbau angetrieben. Die Versorgungskammer 31 von der Ladevorrichtung 29 beaufschlagt den Eingang E der Pumpe 21, deren Ausgang A wiederum auf die verhältnismäßig kleine Fläche vom Kolben 32 einwirkt. In den Reibungsbremsen 5,6 wird dadurch sehr schnell der gewünschte Druck aufgebaut und eingeregelt. Das Regelventil 36 kann bei laufender Pumpe 21 wechselweise geschaltet werden. Dadurch wird es ermöglicht, die Ladevorrichtung 29 gewissermaßen als regulierbares Speicherreservoir zu betreiben, welches nach Lage der Dinge entweder Druckmittel aufnimmt oder zur Verfügung stellt. Im Laufe von Regelprozessen kann in Abhängigkeit von den Randbedingungen entweder die Versorgungskammer 31 oder die Steuerkammer 30 wechselweise mit mehr oder weniger Druckmittel gefüllt werden.

In allen Figuren sind gleiche Merkmale mit gleichen Bezugsziffern und soweit notwendig zusätzlich mit einer besonderen Figurenkennzeichnung t,u,v,w,x,y,z markiert.

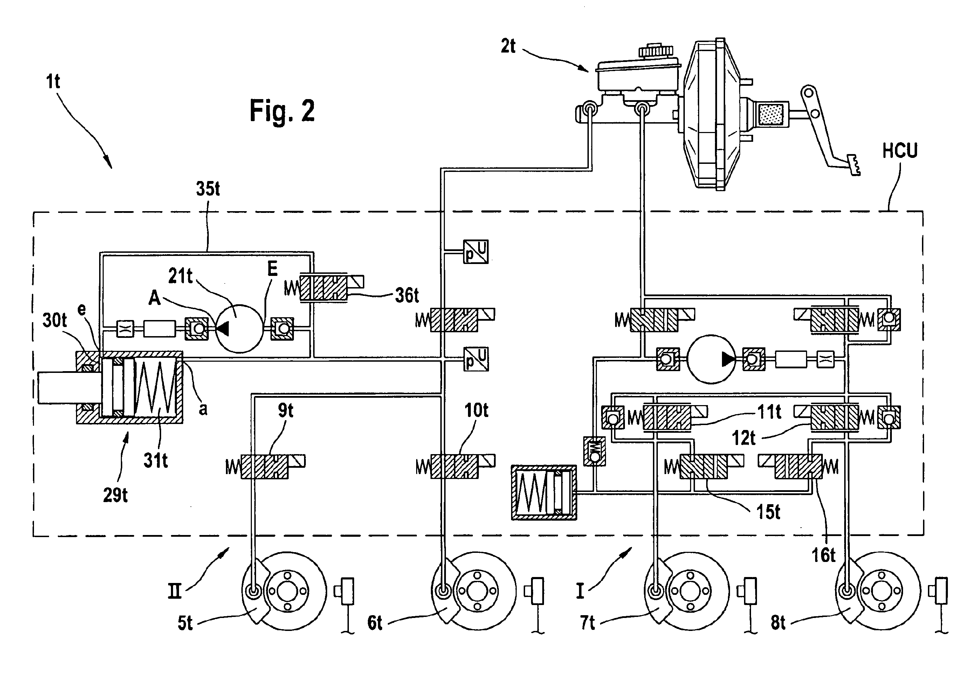

Fig. 2 zeigt eine stark vereinfachte Lösung - ebenfalls mit Kreis II für eine angetriebene Hinterachse - mit einer etwas verändert geschalteten hydraulischen Ladevorrichtung 29t, die grundsätzlich auf einem System wie in Fig. 1 beruht. Jedoch sind in den Radbremskreisen ausschließlich stromlos offene Einlassventile 9t-12t vorgesehen. Mit anderen Worten sind stromlos geschlossene Auslassventile wie auch ein gesonderter Niederdruckspeicher 33 mit Druckfeder 34 im Vergleich mit Fig. 1 rationalisiert. Im weiteren Unterschied zu der Fig. 1 wirkt die hydraulische Pumpe 21t mit ihrem Ausgang A auf den Eingang e von der hydraulischen Ladevorrichtung 29t, deren Ausgang a wiederum mit den Reibungsbremsen 5t-8t verbunden ist. Durch diese Maßnahme wird die Wirkung der hydraulischen Pumpe 21t gewissermaßen hydraulisch übersetzt, um auf die Reibungsbremsen 5t-8t einzuwirken. Weiterhin ist zwischen Eingang E der hydraulischen Pumpe 21t und Eingang e von der Ladevorrichtung 29t ein Bypass 35t vorgesehen, in den ein stromlos offenes Regelventil 36t eingefügt ist. Bei Pumpenlauf wird das Regelventil 36t geschlossen, um das Ansaugen aus der Steuerkammer 30t von der Ladevorrichtung 29t zu unterbinden. Die Verschaltung im Bremskreis der Vorderachse I entspricht einem konventionellen ESP-Gerät. Dabei sind nicht nur die stromlos offenen Einlassventile 11t,12t sondern auch die stromlos geschlossenen Auslassventile 15t,16t vorgesehen.

Die Druckregelung im Bereich der Reibungsbremsen 5t,6t der Hinterachse erfolgt durch so genanntes Multiplexing. Dabei wird keine parallel-zeitgleiche Druckregelung an mehreren Reibungsbremsen 5t,6t ermöglicht, sondern die Druckregelung an den Reibungsbremsen 5t,6t erfolgt sehr schnell zeitlich hintereinander, wobei an der jeweils zu regelnden Reibungsbremse 5t,6t eine Druckerhöhung jeweils durch Speisung anhand der hydraulischen Pumpe 21t und der Ladevorrichtung 29t vorgenommen wird. Mit anderen Worten wird dieselbe Druckquelle nacheinander verschiedenen Verbrauchern aufgeschaltet. Im Anschluß an die Speisung einer Reibungsbremse 5t,6t wird der eingeregelte Druck durch Schließen von dem Einlassventil 9t,10t gekammert. Druckhaltevorgänge erfolgen einfach durch weiteres schließen der Einlassventile 9t,10t, so dass der gegenwärtige Druck gewissermaßen eingeschlossen ist. Ein Druckabbau erfolgt, indem das Einlassventil 9t,10t, und das Regelventil 36t im Bypass 35t geöffnet werden, so dass das gewünschte Volumen in der Versorgungskammer 31t von der Ladevorrichtung 29t aufgenommen werden kann. Durch diese Maßnahme erfüllt die Ladevorrichtung 29t nebenbei auch die Funktion von einem konventionellen Niederdruckspeicher 33t-wie er in dem konventionell betriebenen Bremskreis I ersichtlich ist. Wesentlich ist nun, dass das Volumen der Kammern 30t,31t im Wesentlichen so bemessen ist, dass immer das erforderliche Schluckvolumen vorgehalten wird.

Die Ausführungsform nach Fig. 3 stimmt in Hinblick auf die Verschalung für die angetriebene Hinterachse mit der Ausführungsform nach Fig. 2 überein. Weiterhin stimmt der Aufbau im Vorderachskreis I identisch mit dem Aufbau im Hinterachskreis II überein. Das Bremsgerät 2 verzichtet auf einen pneumatischen Bremskraftverstärker und verfügt statt dessen über einen Simulator 40. Als weitere Abwandlung gegenüber anderen Ausführungsformen, ist jede Ladevorrichtung 29u mit einem Wegsensor 41 ausgerüstet, so dass das vorhandene Schluckvolumen in der Steuerkammer 30u und auch das vorliegende Versorgungsvolumen in der Versorgungskammer 31u direkt gemessen, und zur Weiterverarbeitung an die elektronische Regeleinheit weitergegeben wird. Im übrigen stimmt die Bauform, und das Betriebsverfahren des Multiplexing mit derjenigen in Fig. 2 überein.

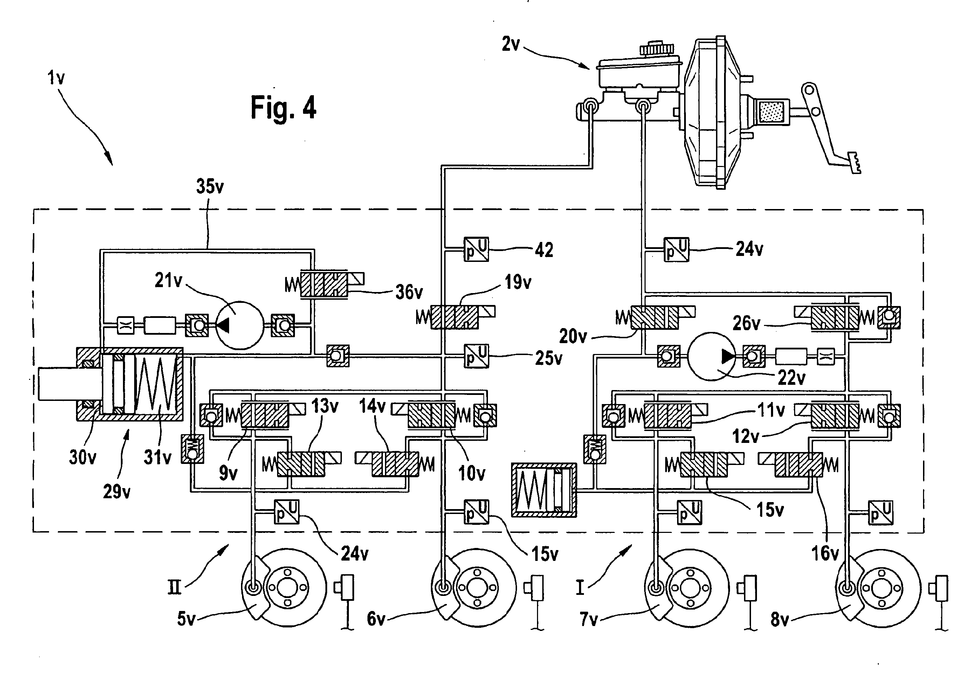

Die Ausführungsform nach Fig. 4 stimmt in weiten Teilen mit der Ausführungsform nach Fig. 2 überein, wobei ausschließlich im Kreis II der Hinterachse eine Ladevorrichtung 29v für die hydraulische Pumpe 21v vorgesehen ist. Jedoch verfügen alle Reibungsbremsen 5v- 8v über Ein- und Auslassventile 9v-12v;13v-16vsowie über Drucksensoren 24v,25v. Der Vorderachskreis ist im Wesentlichen in konventioneller ESP-Verschaltung gehalten. Weiterhin wird von dem Regelungsprinzip des Multiplexing abgerückt. Überschüssiges Druckmittel kann durch Öffnen von dem Regelventil 36v in dem Bypass 35v in die Steuerkammer 30v abgelassen werden.

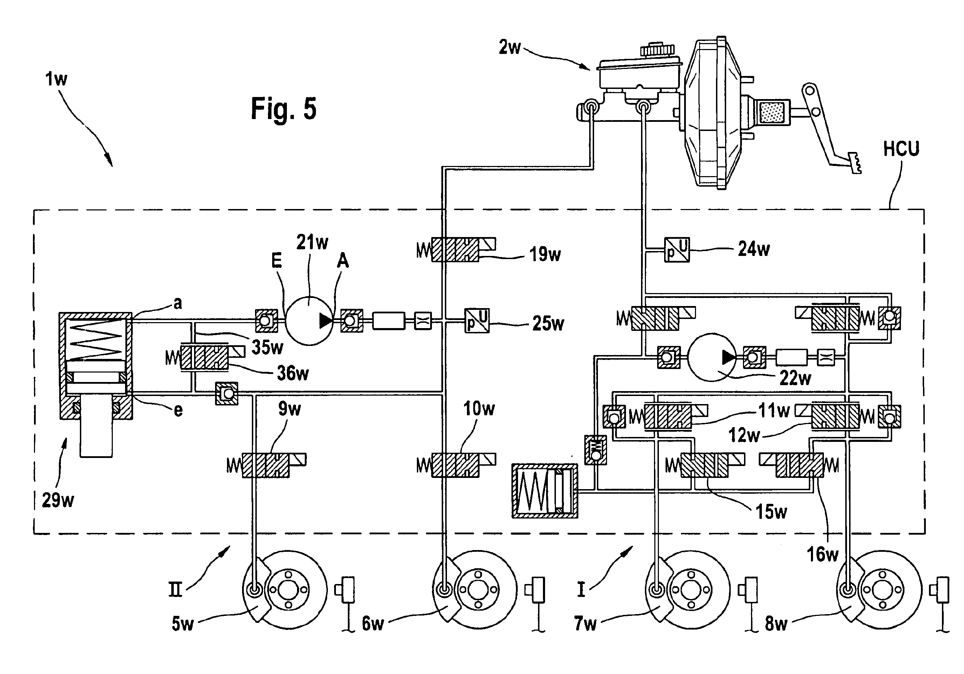

Die Ausführungsform nach Fig. 5 betrifft wieder eine Multiplexing-Variante, also ein Bremssystem ohne stromlos geschlossene Auslassventile und mit einer gestaffelten Druckregelung. Die Druckregelung an den Reibungsbremsen 5w-8w erfolgt seriell nacheinander. Jedoch befindet sich gemäß Fig. 2 zwischen Ausgang A der Pumpe 21t und den Radbremsen 5-8t das Regelventil 36t, welches in der Anordnung nach Fig. 5 in eine Verbindung zwischen Ausgang a und Eingang e von der Ladevorrichtung 29 eingeschleift ist. Der nicht angetriebene andere Kreis ist wie in Fig. 2 konventionell entsprechend einer üblichen ESP-Anlage ausgeführt.

Die Fig. 6 stimmt im Wesentlichen mit der Fig. 5 überein. Allerdings sind beide Kreise I,II identisch und verfügen über eigenständige Ladevorrichtungen 29x die zusätzlich eigenständige Wegsensoren 41x aufweisen. Dadurch wird es ermöglicht, den Füllstand der Ladevorrichtungen 29x zusätzlich in die Druckregelung mit einzubeziehen. Ein Merkmal, das generell bei allen Ausführungsbeispielen vorgesehen sein kann. Weil beide Kreise I,II gewissermaßen by-wire unter Abtrennung vom Hauptzylinder 3x betrieben werden, entfällt hier die Möglichkeit, dem Fahrzeugführer eine konkrete Rückwirkung aus dem Bremssystem zu übermitteln. Aus diesen Gründen ist der Hauptzylinder 3x mit einem gesonderten Simulator 40x versehen. Weiterhin ist hinzuzufügen, dass neben den Sensoren 24x,25x für beide Kreise I,II eine gesonderte Druckerfassung anhand von zwei unabhängig voneinander vorgesehenen Drucksensoren 42,43 beabsichtigt ist.

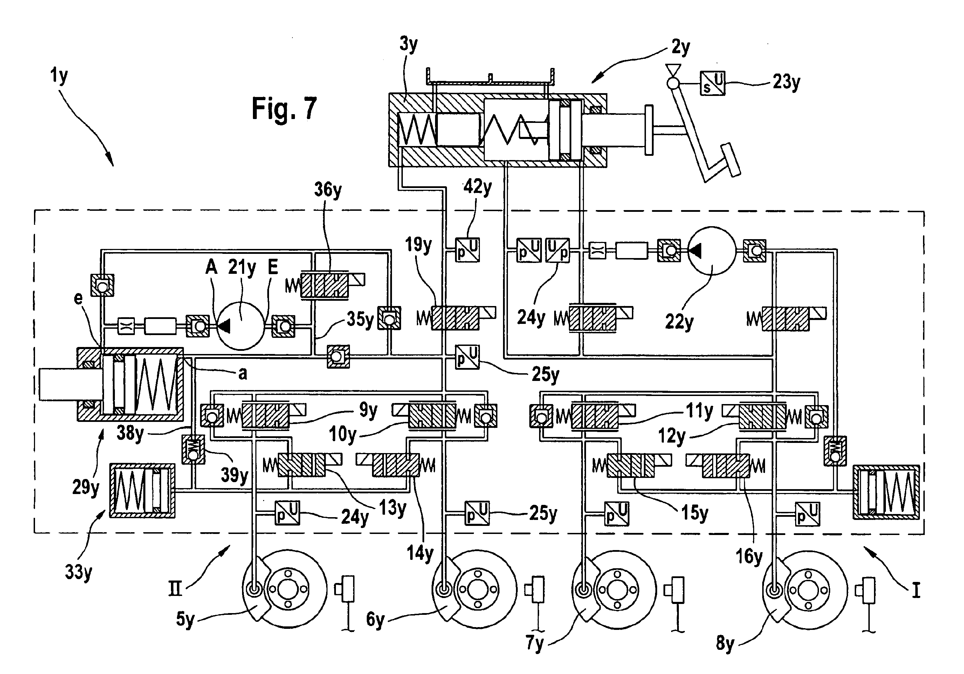

Die Figur 7 veranschaulicht eine Variante, die einen hydraulischen Zentralverstärker beinhaltet, wobei der Ausgang der Pumpe 21y für wenigstens einen Kreis II zwecks Verstärkung auf einen Kolben im Hauptzylinder 3y einwirkt. Das Bremsgerät 2y ist als besonderer Hauptzylinder ohne pneumatischen Bremskraftverstärker ausgebildet. Gemäß Fig. 7 wirkt die Pumpe 21y mit ihrem Ausgang A auf den Eingang e von der Ladevorrichtung 29y, welcher wiederum auf Reibungsbremsen 5y,6y von einer angetriebenen (Hinter-) Achse einwirkt. Der Bremskreis der Vorderachse ist dagegen ohne Ladevorrichtung ausgebildet, und verfügt über einen Saug- bzw. Druckanschluß am Hauptzylinder 3y.

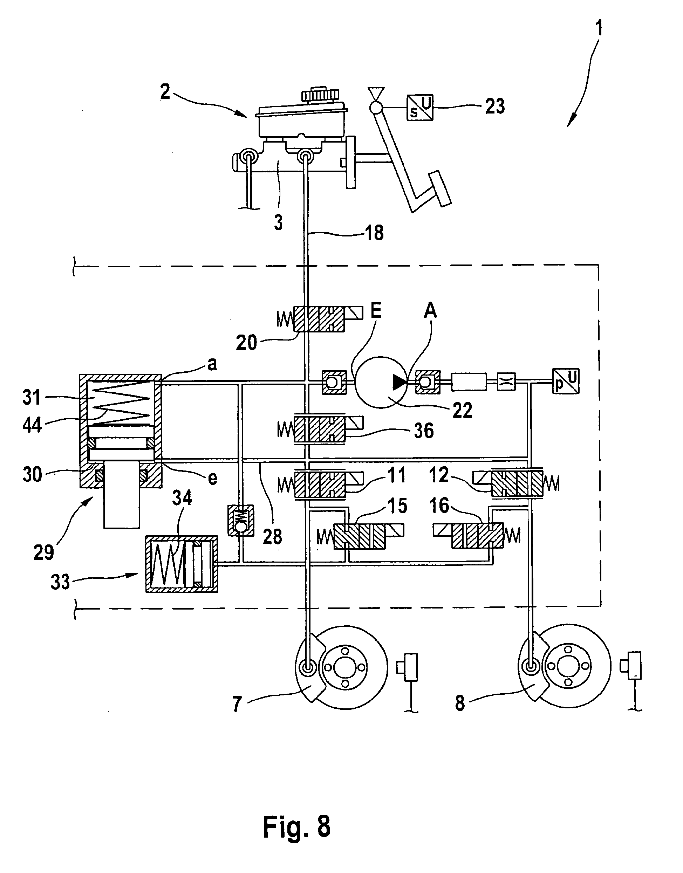

Der Fig. 8 ist eine vereinfachte Ausführungsform vergleichbar Fig. 4 entnehmbar, wobei lediglich ein Kreis dargestellt ist. Ein pneumatischer Bremskraftverstärker ist vollständig durch eine erfindungsgemäße Druckquelle ersetzt und ein gesonderter Niederdruckspeicher 33 ist der Versorgungskammer 31 vorgeschaltet. Durch die geschickte Verschaltung der Ladevorrichtung 29 wird es ermöglicht, die Versorgungskammer 31 zu befüllen, wenn Druckmittel aus den Reibungsbremsen 5-8 abgelassen wird. Durch zusätzliche Abzweige ist es ermöglicht, dass die Versorgungskammer 31 unter Umgehung der Pumpe 22 mit den Radbremsen 5-8 oder dem Hauptzylinder 3 verbindbar ist. Trennventil 20 und Regelventil 36 können aktiv in die Regelung eingebunden werden.

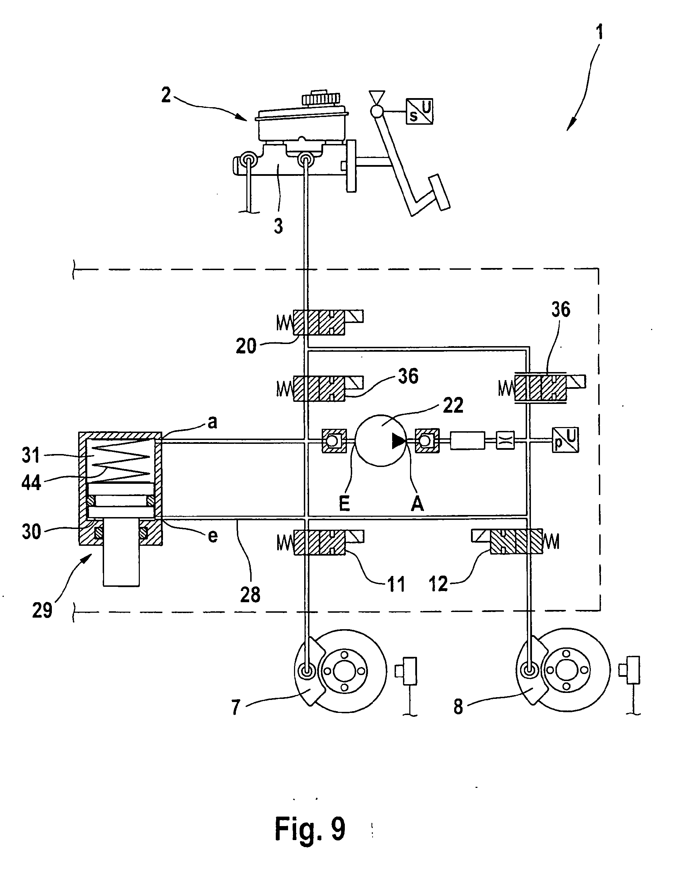

Fig. 9 ist eine Ausführungsform vergleichbar Fig. 8, jedoch ist lediglich eine reduzierte Ventilanzahl und auch kein Niederdruckspeicher vorgesehen, um das bereits beschriebene Multiplexing durchzuführen.

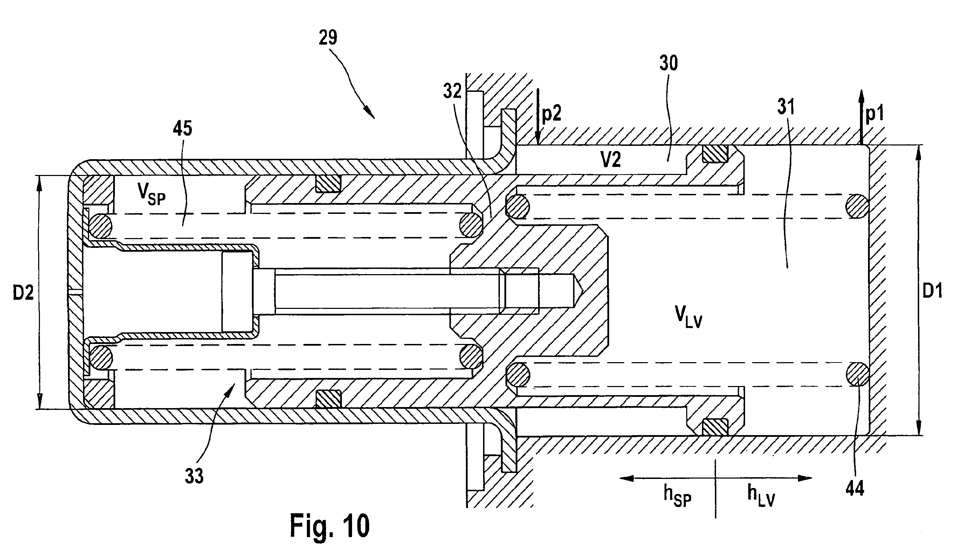

Fig. 10 zeigt einen konstruktiven Vorschlag für eine Ladevorrichtung 29 mit einem integriertem Niederdruckspeichervolumen im Schnitt sowie in größerem Maßstab. Der Kolben 32 ist in einem Blechgehäuse sowie in einem nicht näher dargestellten Aufnahmekörper für die hydraulische Pumpe 21,22 bewegbar geführt angeordnet. Der Kolben 32 ist als Stufenkolben ausgebildet, der das Druckmittel in der Versorgungskammer 31 (Volumen VLV) mit der Kolbenfläche D1 beaufschlagt. Der Kolben 32 trennt die Versorgungskammer 31 von der Steuerkammer 20 (Volumen V2), welche von einem pumpenseitig abgezweigten Förderstrom mit dem Druck p2 beaufschlagt ist. Der abgezweigte Druck p2 wirkt auf eine - im Vergleich mit der Kolbenfläche D1 reduzierten Kolbenfläche.Zur Vorladung kann der Kolben 32 einen Vorladehub hLV ausüben kann. In der entgegen gesetzter Richtung kann der Kolben 32 zwecks Erfüllung seiner Niederdruckspeicherfunktion einen Speicherhub hsp ausführen. Es ist hinzuzufügen, dass am Kolben 32 eine gefesselte Feder angeordnet ist, die der axial elastischen Abstützung am Blechgehäuse dient. Die Feder mit Federtopf und Fesselungselement befindet sich in einem Innenraum Vsp der an die Umgebungsatmosphäre (Luft) angeschlossen ist. Entgegen der gefesselten Feder wirkt noch die Druckfeder 34 auf den Kolben 32.

Die beschriebenen Anordnungen eignen sich bevorzugt zur Verwendung mit einer regenerativen Bremsvorrichtung. In Verbindung mit regenerativen Antriebssystemen von Personenkraftfahrzeugen wird oft der hybride Antriebsstrang genannt, der sich in unterschiedliche Grundtypen einteilen lässt. Bei einem seriellen Hybridsystem erhält ausschließlich ein Elektromotor mechanischen Durchgriff auf angetriebene Räder. Ein Verbrennungsmotor wird in einem optimalen Arbeitspunkt für einen Generator betrieben, und dient ausschließlich der Erzeugung von elektrischer Energie.

Bei einem so genannten parallelen Hybridsystem können zwei Arbeitsmaschinen, nämlich ein Verbrennungsmotor und ein Elektromotor, anhand von zwei Kupplungen unabhängig voneinander mechanischen Durchgriff auf angetriebene Räder erhalten. Im regenerativen Betrieb (Energierückgewinnungsmodus) wird die Kupplung für den Verbrennungsmotor geöffnet, um unerwünschte Schleppmomente des Verbrennungsmotors auszuschalten.

Ein seriell-paralleles Hybridsystem verfügt über zwei Elektromaschinen, von denen eine als Generator und die andere wechselweise als Generator oder als Motor betrieben werden kann. Die kombinatorisch nutzbare Elektromaschine und der Verbrennungsmotor wirken auf ein Planetengetriebe, welches eine Momentenaddition in Richtung Abtrieb und gleichzeitig eine Leistungsverzweigung in Richtung Generator erlaubt.

Ein Two Mode Hybrid System kombiniert ein stufenlos regulierbares CVT-Getriebe mit einer 4-Gang Automatik mit festen Übersetzungsverhältnissen sowie einen Verbrennungsmotor und zwei elektrische Maschinen, um über den gesamten Fahr- und Geschwindigkeitsbereich einen hohen energetischen Wirkungsgrad zu erzielen. Aus diesen Gründen ist im unteren Geschwindigkeitsbereich vorwiegend der elektrische Antrieb aktiv, während Hochgeschwindigkeitspassagen durch den Verbrennungsmotor dominiert werden. Die Getriebe dienen der Vermittlung zwischen den beiden Antriebsformen.

Daneben gibt es auch Trough the road Systeme. Zur Vermeidung einer aufwändigen getrieblichen Vermittlung beinhaltet das System achsweise unterschiedliche Antriebsformen, beispielsweise einen elektrisch regenerativen Vorderradantrieb in Kombination mit einer konventionell durch einen Verbrennungsmotor angetriebenen Hinterachse. Dadurch wird es ermöglicht, beispielsweise im unteren Geschwindigkeitsbereich vorwiegend den Elektroantrieb der Vorderachse einzusetzen, um im hohen Geschwindigkeitsbereich auf den konventionellen Hinterachsantrieb zu wechseln. Zur Nutzung regenerativer Bremsmomente dient dann ausschließlich die Vorderachse.

Wie zu ersehen ist, gibt es eine große Variationsbreite unterschiedlicher Antriebsstrang-Gestaltungen, mit unterschiedlichen Vor- und Nachteilen. Die Variantenvielfalt im Antriebsstrang stellt neben der Anforderung nach einer komfortabel-nahtlosen Anpassung eines Reibungsbremssystems eine vorrangige Problematik der vorliegenden Erfindung dar. Mit anderen Worten ist das Bremssystem mit zuverlässigen und dabei einfachen Maßnahmen so an die unterschiedlichen Gestaltungsvarianten der Hybridtechnologie anzupassen, dass ein hoher Bremsbetätigungskomfort bei bestmöglicher Energieausnutzung ermöglicht wird.

Während konventionelle Bremsanlagen ausschließlich eine irreversible Wandlung von kinetischer Energie in mechanische Energie erlauben, sind die in Rede stehenden fremdansteuerbaren Fahrzeugsysteme am besten geeignet, eine Mittlung zwischen dynamischer Fahrzeugverzögerung einerseits und effektiver Energierückgewinnung andererseits zu ermöglichen. Denn in Abhängigkeit von einem erforderlichen Sollbremsmoment ist das mechanisch zu wandelnde Bremsmoment radindividuell variabel - in Abhängigkeit von einem regenerativ durch einen Generator abfallenden Bremsmoment - wie auch in Abhängigkeit von den ausnutzbaren Radaufstandskräften - zu managen. Dabei ist zu berücksichtigen, dass das regenerativ nutzbare Bremsmoment von dem Batterieladezustand, von dem Betriebsbereich sowie von den speziellen Eigenschaften der elektrischen Maschine abhängig ist. Für einen Fahrzeugführer sollen Übergangspunkte zwischen Bremsbetrieb mit Reibungsbremsanteil einerseits und rein regenerativem Bremsbetrieb andererseits nicht erspürbar sein.

### Bezugszeichenliste

- 1: Fahrzeugbremsanlage
- 2: Bremsgerät
- 3: Hauptzylinder
- 4: Bremskraftverstärker
- 5: Reibungsbremse
- 6: Reibungsbremse
- 7: Reibungsbremse
- 8: Reibungsbremse
- 9: Einlassventil
- 10: Einlassventil
- 11: Einlassventil
- 12: Einlassventil
- 13: Auslassventil
- 14: Auslassventil
- 15: Auslassventil
- 16: Auslassventil
- 17: Verbindung
- 18: Verbindung
- 19: Trennventil
- 20: Trennventil
- 21: Pumpe
- 22: Pumpe
- 23: Pedalwinkelsensor
- 24: Drucksensor
- 25: Drucksensor
- 26: Umschaltventil
- 27: Umschaltventil
- 28: Abzweig
- 29: Ladevorrichtung
- 30: Steuerkammer
- 31: Versorgungskammer
- 32: Kolben
- 33: Niederdruckspeicher
- 34: Druckfeder
- 35: Bypass
- 36: Regelventil
- 37: Rückschlagventil
- 38: Verbindung
- 39: Rückschlagventil
- 40: Simulator
- 41: Wegsensor
- 42: Drucksensor
- 43: Drucksensor
- 44: Druckfeder
- 45: Druckfeder

- I: Kreis
- II: Kreis
- A,a: Ausgang
- E,e: Eingang

## Patentansprüche

1. Fremdansteuerbare elektrohydraulische Fahrzeugbremsanlage umfassend ein elektrohydraulisches Fahrzeugsystem mit Schlupfregelung, umfassend Mittel zur Äußerung eines Bremsbetätigungswunsches in Form einer Mensch-Maschine-Schnittstelle, umfassend Reibungsbremsen (5, 6, 7, 8) zur Wandlung von kinetischer Energie, wobei die Reibungsbremsen (5, 6, 7, 8) in, bevorzugt wenigstens zwei unabhängigen Bremskreisen organisiert sind, umfassend elektro-hydraulische Mittel zum Betrieb der Reibungsbremsen (5, 6, 7, 8), bestehend aus einer elektronisch geregelten Hydraulikeinheit mit wenigstens einer hydraulischen Pumpe (21, 22) als Druckquelle, um insbesondere in Abhängigkeit von einem Bremsbetätigungswunsch eine Verteilung und/oder Regelung von Reibungsbremsanteilen, oder einen fremdangesteuerten Bremseneingriff, zu ermöglichen, und wobei die Mensch-Maschine-Schnittstelle generell mechanisch von den Reibungsbremsen entkoppelbar ist, umfassend mit der hydraulischen Pumpe (21,22) zugeordneten Mitteln, die es der hydraulischen Pumpe (21,22) erlauben, zusätzlich eine hydraulische Ladevorrichtung (29) anzutreiben, die als Kolben-Zylinder-Einheit mit einem Eingang (e) und mit einem Ausgang (a) ausgebildet ist, welche zur Vorladung mit einem Eingang (E) der hydraulischen Pumpe (21,22) verbunden ist, sowie mit einem verschiebbar in einem Gehäuse angeordneten Kolben (32) der Kolben-Zylinder-Einheit, die eine Steuerkammer (30) von einer Versorgungskammer (31) trennt, wobei die Versorgungskammer (31) mit dem Eingang (E) der hydraulischen Pumpe (21,22) verbunden ist, wobei eine Verbindung zwischen dem Ausgang (A) der hydraulischen Pumpe (21,22) und der Steuerkammer (30) vorgesehen ist und wobei die der Pumpe (21, 22) zugeordneten Mittel wenigstens einen Abzweig (28), der hinter einem Ausgang (A) der hydraulischen Pumpe (21,22) angeordnet ist, aufweisen, **dadurch gekennzeichnet, dass** die der Pumpe (21,22) zugeordneten Mittel ein Regelventil (36) zum regulieren einer Ladefunktion aufweisen, und dass ein zusätzlicher Abzweig zwischen dem Ausgang (a) der Kolben-Zylinder-Einheit und dem Eingang (E) der hydraulischen Pumpe (21,22) vorgesehen und geeignet ist, um die Versorgungskammer (31) der Kolben-Zylinder-Einheit, unter Umgehung der hydraulischen Pumpe (21,22), mit den Radbremsen (5-8) oder dem Hauptzylinder (3) zu verbinden.

2. Fremdansteuerbare elektrohydraulische Fahrzeugbremsanlage nach Anspruch 1, **dadurch gekennzeichnet, dass** die hydraulische Pumpe (21,22) die Ladevorrichtung (29) antreibt, indem ein Ausgangsförderstrom geteilt, und ein abgetrennter Teil der Ladevorrichtung (29) zugeführt wird.

3. Fremdansteuerbare elektrohydraulische Fahrzeugbremsanlage nach Anspruch 1, **dadurch gekennzeichnet, dass** die Versorgungskammer (31) ein variables Druckmittelreservoir zur Versorgung der hydraulischen Pumpe (21,22) bildet, und dass ein Saugpfad der hydraulischen Pumpe (21,22) in der Versorgungskammer (31) endet.

4. Fremdansteuerbare elektrohydraulische Fahrzeugbremsanlage nach Anspruch 1, **dadurch gekennzeichnet, dass** der Kolben (32) als Stufenkolben mit zwei Kolbenflächen derart ausgebildet ist, dass das von der hydraulischen Pumpe (21,22) in die Steuerkammer (30) eingespeister Druckmittel auf die erste Kolbenfläche wirkt.

5. Fremdansteuerbare elektrohydraulische Fahrzeugbremsanlage nach Anspruch 4, **dadurch gekennzeichnet, dass** die zweite Kolbenfläche auf das Druckmittel in der Versorgungskammer (31) wirkt, und dass die zweite Kolbenfläche größer als die erste Kolbenfläche ausgebildet ist.

6. Fremdansteuerbare elektrohydraulische Fahrzeugbremsanlage nach Anspruch 1, **dadurch gekennzeichnet, dass** der Kolben (32) permanent von einer elastisch vorgespannten Druckfeder (34) beaufschlagt ist, so dass der Kolben (32) permanent elastisch in Richtung Steuerkammer (30) gedrängt wird.

7. Fremdansteuerbare elektrohydraulische Fahrzeugbremsanlage nach einem oder mehreren der vorhergehenden Ansprüche, **dadurch gekennzeichnet, dass** die Ladevorrichtung ein integriertes Niederdruckspeichervolumen aufweist.

## Claims

1. Externally actuable electrohydraulic vehicle brake system comprising an electrohydraulic vehicle system with slip control, comprising means for expressing a brake activation request in the form of a man/machine interface, comprising friction brakes (5, 6, 7, 8) for converting kinetic energy, wherein the friction brakes (5, 6, 7, 8) are organized into preferably at least two independent brake circuits, comprising electrohydraulic means for operating the friction brakes (5, 6, 7, 8), consisting of an electronically controlled hydraulic unit having at least one hydraulic pump (21, 22) as a pressure source, in order to permit distribution and/or control of friction braking portions, in particular as a function of a brake activation request, or an externally actuated braking intervention, and wherein the man/machine interface can generally be decoupled mechanically from the friction brakes, comprising means assigned to the hydraulic pump (21, 22) which permit the hydraulic pump (21, 22) additionally to drive a hydraulic charging device (29) which is embodied as a piston/cylinder unit with an inlet (e) and with an outlet (a), which, for the purpose of pre-charging, is connected to an inlet (E) of the hydraulic pump (21, 22), and also to a piston (32), displaceably arranged in a housing, of the piston/cylinder unit which separates a control chamber (30) from a supply chamber (31), wherein the supply chamber (31) is connected to the inlet (E) of the hydraulic pump (21, 22), wherein a connection is provided between the outlet (A) of the hydraulic pump (21, 22) and the control chamber (30) and wherein the means assigned to the pump (21, 22) have at least one branch (28), which is arranged downstream of an outlet (A) of the hydraulic pump (21, 22), **characterized in that** the means assigned to the pump (21, 22) have a control valve (36) for regulating a charging function, and **in that** an additional branch between the outlet (a) of the piston/cylinder unit and the inlet (E) of the hydraulic pump (21, 22) is provided and is suitable for connecting the supply chamber (31) of the piston/cylinder unit to the wheel brakes (5-8) or the master cylinder (3) by bypassing the hydraulic pump (21, 22).

2. Externally actuable electrohydraulic vehicle brake system according to Claim 1, **characterized in that** the hydraulic pump (21, 22) drives the charging device (29) **in that** an initial feed current is divided, and a separate part is fed to the charging device (29).

3. Externally actuable electrohydraulic vehicle brake system according to Claim 1, **characterized in that** the supply chamber (31) forms a variable pressure medium reservoir for supplying the hydraulic pump (21, 22), and **in that** a suction path of the hydraulic pump (21, 22) ends in the supply chamber (31).

4. Externally actuable electrohydraulic vehicle brake system according to Claim 1, **characterized in that** the piston (32) is embodied as a stepped piston with two piston faces in such a way that the pressure medium which is fed into the control chamber (30) by the hydraulic pump (21, 22) acts on the first piston face.

5. Externally actuable electrohydraulic vehicle brake system according to Claim 4, **characterized in that** the second piston face acts on the pressure medium in the supply chamber (31), and **in that** the second piston face is embodied in such a way that it is larger than the first piston face.

6. Externally actuable electrohydraulic vehicle brake system according to Claim 1, **characterized in that** an elastically prestressed compression spring (34) continuously acts on the piston (32) so that the piston (32) is continuously forced elastically in the direction of the control chamber (30).

7. Externally actuable electrohydraulic vehicle brake system according to one or more of the preceding claims, **characterized in that** the charging device has an integrated low pressure accumulator volume.

## Revendications

1. Installation de freinage électrohydraulique de véhicule, pouvant être commandée de l'extérieur, comprenant un système de véhicule électrohydraulique avec une régulation du patinage, comprenant des moyens pour exprimer un souhait d'actionnement des freins sous la forme d'une interface homme-machine, comprenant des freins à friction (5, 6, 7, 8) pour convertir l'énergie cinétique, les freins à friction (5, 6, 7, 8) étant organisés de préférence en au moins deux circuits de freinage indépendants, comprenant des moyens électrohydrauliques pour faire fonctionner les freins à friction (5, 6, 7, 8), constitués d'une unité hydraulique à régulation électronique, avec au moins une pompe hydraulique (21, 22) en tant que source de pression, pour permettre, notamment en fonction d'un souhait d'actionnement des freins, une répartition et/ou une régulation des proportions de freinage par friction, ou une intervention de freinage à commande extérieure, et l'interface homme-machine pouvant être généralement désaccouplée mécaniquement des freins à friction, comprenant des moyens associés à la pompe hydraulique (21, 22), qui permettent à la pompe hydraulique (21, 22) d'entraîner en outre un dispositif de charge hydraulique (29) qui est réalisé sous forme d'unité cylindre-piston avec une entrée (e) et une sortie (a) connectée en vue de la précharge à une entrée (E) de la pompe hydraulique (21, 22), et comprenant également un piston (32) de l'unité cylindre-piston disposé de manière déplaçable dans un boîtier, qui sépare une chambre de commande (30) d'une chambre d'alimentation (31), la chambre d'alimentation (31) étant connectée à l'entrée (E) de la pompe hydraulique (21, 22), une connexion entre la sortie (A) de la pompe hydraulique (21, 22) et la chambre de commande (30) étant prévue, et les moyens associés à la pompe (21, 22) présentant au moins une dérivation (28) qui est disposée derrière une sortie (A) de la pompe hydraulique (21, 22), **caractérisée en ce que** les moyens associés à la pompe (21, 22) présentent une soupape de régulation (36) pour réguler une fonction de charge et **en ce qu'**une dérivation supplémentaire entre la sortie (a) de l'unité cylindre-piston et l'entrée (E) de la pompe hydraulique (21, 22) est prévue et est conçue pour relier la chambre d'alimentation (31) de l'unité cylindre-piston, en contournant la pompe hydraulique (21, 22), aux freins de roue (5-8) ou au cylindre principal (3).

2. Installation de freinage électrohydraulique de véhicule, pouvant être commandée de l'extérieur, selon la revendication 1, **caractérisée en ce que** la pompe hydraulique (21, 22) entraîne le dispositif de charge (29) en divisant un flux de refoulement de sortie, et une partie séparée est acheminée au dispositif de charge (29).

3. Installation de freinage électrohydraulique de véhicule, pouvant être commandée de l'extérieur, selon la revendication 1, **caractérisée en ce que** la chambre d'alimentation (31) forme un réservoir de fluide sous pression pour l'alimentation de la pompe hydraulique (21, 22), et **en ce qu'**un chemin d'aspiration de la pompe hydraulique (21, 22) se termine dans la chambre d'alimentation (31).

4. Installation de freinage électrohydraulique de véhicule, pouvant être commandée de l'extérieur, selon la revendication 1, **caractérisée en ce que** le piston (32) est réalisé sous forme de piston étagé avec deux surfaces de piston, de telle sorte que le fluide sous pression injecté par la pompe hydraulique (21, 22) dans la chambre de commande (30) agisse sur la première surface du piston.

5. Installation de freinage électrohydraulique de véhicule, pouvant être commandée de l'extérieur, selon la revendication 4, **caractérisée en ce que** la deuxième surface du piston agit sur le fluide sous pression dans la chambre d'alimentation (31), et **en ce que** la deuxième surface du piston est plus grande que la première surface du piston.

6. Installation de freinage électrohydraulique de véhicule, pouvant être commandée de l'extérieur, selon la revendication 1, **caractérisée en ce que** le piston (32) est sollicité en permanence par un ressort de pression (34) précontraint élastiquement, de sorte que le piston (32) soit pressé en permanence élastiquement dans la direction de la chambre de commande (30).

7. Installation de freinage électrohydraulique de véhicule, pouvant être commandée de l'extérieur, selon l'une ou plusieurs des revendications précédentes, **caractérisée en ce que** le dispositif de charge présente un volume d'accumulation basse pression intégré.
